# EUROPEAN PATENT SPECIFICATION

(11) **EP 3 757 412 B1**
(45) Date of publication and mention of the grant of the patent: **01.12.2021**
(21) Application number: 19756564.1
(22) Date of filing: 08.02.2019
(51) Int. Cl.: F16C 33/78, F16C 19/18, F16J 15/3232, F16J 15/34

(54) **SEALING DEVICE**
DICHTUNGSVORRICHTUNG
DISPOSITIF D'ÉTANCHÉITÉ

(30) Priority: 22.02.2018 JP 2018029423
(43) Date of publication of application: 30.12.2020
(73) Proprietor: NOK Corporation, Minato-ku, Tokyo 105-8585 (JP)
(72) Inventor: SHUTO, Yuichi, Fukushima-shi, Fukushima 960-1193 (JP); SASAKI, Kei, Fukushima-shi, Fukushima 960-1193 (JP)
(74) Representative: TBK
(86) International application number: PCT/JP2019/004576
(87) International publication number: WO 2019/163557

(56) References cited:
- JP-A- 2009 115 110
- JP-A- 2009 115 110
- JP-A- 2017 180 599
- JP-B2- 3 991 200
- JP-B2- 3 991 200

## Description

### TECHNICAL FIELD

The present invention relates to sealing devices for sealing insides of rolling bearings.

### BACKGROUND ART

Rolling bearings, such as ball bearings, are well known and are used, for example, in hubs of automotive vehicles. A sealing device for sealing the inside of a rolling bearing is disclosed in Patent Document 1. The sealing device includes an annular body fixed to the outer race of the rolling bearing, a radial lip (grease lip) extending radially inward from the annular body, and two side lips extending laterally from the annular body. The radial lip is in contact with the outer peripheral surface of the inner race of the bearing or the outer peripheral surface of a part fixed to the inner race, and has a function of sealing lubricant (grease) inside the bearing, whereas the two side lips are in contact with a flange of the inner race, and have a function of sealing, so that foreign matter, such as water and dust, does not enter into the inside of the bearing from the outside. Patent Document 2 discloses a sealing device having the features of the preamble of independent claim 1. Further prior art is discussed in Patent Document 3.

### BACKGROUND DOCUMENTS

### Patent Documents

Patent Document 1: JP 3 991200 B2
Patent Document 2: JP 2017 180599 A
Patent Document 3: JP 2009 115110 A

### SUMMARY OF THE INVENTION

For this type of sealing device, it is desirable that the torque applied to the rotating member, such as the hub or inner race, be as small as possible.

Therefore, the present invention provides a sealing device that can reduce torque applied to a rotating member.

A sealing device according to the present invention is defined by independent claim 1. Further advantageous developments are set out in the dependent claims. According to the present invention, a contact width of the side lip to the flange is less than 0.041 mm in a case in which the sealing device is mounted on the rolling bearing. In accordance with this aspect, the torque applied to a rotating member can be remarkably reduced.

If the contact width of the side lip to the flange is less than 0.035 mm, the torque can be further reduced. It is more preferable that the contact width be less than 0.033 mm.

### BRIEF DESCRIPTION OF THE DRAWINGS

Fig. 1 is a partial cross-sectional view of an example of a rolling bearing in which a sealing device according to an embodiment of the present invention is used;
Fig. 2 is a partial cross-sectional view of the sealing device according to the embodiment of the present invention;
Fig. 3 is a partial cross-sectional view of the sealing device of Fig. 2 mounted on the rolling bearing.
Fig. 4 is a graph showing variations in torque applied by the sealing devices to the hub of the rolling bearing;
Fig. 5A is a graph showing variations in torque applied by the sealing devices to the hub of the rolling bearing in which the contact width of the side lip of the sealing device is changed;
Fig. 5B is a graph showing variations in torque applied by the sealing devices to the hub of the rolling bearing in which the contact width of the side lip of the sealing device is changed;
Fig. 5C is an enlarged graph of a part of Fig. 5B;
Fig. 6 is a partial cross-sectional view of a sealing device according to a modification;
Fig. 7 is a partial cross-sectional view of a sealing device according to another modification; and
Fig. 8 is a partial cross-sectional view of a sealing device according to another modification.

### DESCRIPTION OF EMBODIMENTS

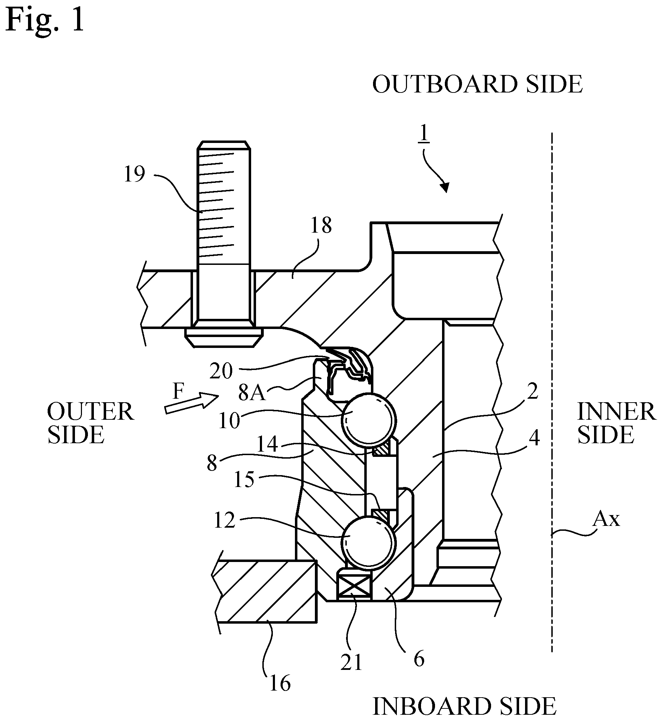

Fig. 1 shows a hub bearing for an automotive vehicle, which is an example of a rolling bearing, in which a sealing device according to an embodiment of the present invention is used. However, the use of the present invention is not limited to hub bearings, and the present invention can also be applied to other rolling bearings. In the following description, the hub bearing is a ball bearing. However, the use of the present invention is not limited to ball bearings, and the present invention can also be applied to other rolling bearings, such as roller bearings and needle bearings, having other types of rolling elements. The present invention is also applicable to rolling bearings used in machines other than automotive vehicles.

The hub bearing 1 includes a hub (inner member) 4 having a hole 2 into which a spindle (not shown) is inserted, an inner race (inner member) 6 attached to the hub 4, an outer race (outer member) 8 located outside of the hub 4 and the inner race 6, a plurality of balls 10 arranged in a row between the hub 4 and the outer race 8, a plurality of balls 12 arranged in a row between the inner race 6 and the outer race 8, and a plurality of retainers 14 and 15 for retaining the balls in place.

Whereas the outer race 8 is stationary, the hub 4 and the inner race 6 rotate as the spindle rotates.

The common central axis Ax of the spindle and hub bearing 1 extends in the vertical direction in Fig. 1. In Fig. 1, only the left part with respect to the central axis Ax is shown. Although not shown in detail, the upper side of Fig. 1 is the outer side (outboard side) of the automotive vehicle on which the wheels are arranged, whereas the lower side is the inner side (inboard side) on which the differential gears are arranged. The outer side and the inner side shown in Fig. 1 mean the outer side and the inner side in radial directions, respectively.

The outer race 8 of the hub bearing 1 is fixed to the hub knuckle 16. The hub 4 has an outboard side flange 18 extending further outward in radial directions than the outer race 8. A wheel can be attached to the outboard side flange 18 by hub bolts 19.

A sealing device 20 that seals the gap between the outer race 8 and the hub 4 is located near the end of the outer race 8 on the outboard side, and inside the end of the outer race 8 on the inboard side. Another sealing device 21 that seals the gap between the outer race 8 and the inner race 6 is located inside the end of the inner side of the outer race 8. The function of the sealing devices 20 and 21 prevents the grease, that is, the lubricant, from flowing out from the inside of the hub bearing 1 and prevents foreign matter (water, including muddy water or salt water) from entering the inside of the hub bearing 1 from the outside. In Fig. 1, an arrow F indicates an example of the direction of foreign matter flow from the outside.

The sealing device 20 is located between the rotating hub 4 of the hub bearing 1 and the stationary outer race 8 to seal the gap between the hub 4 and the outer race 8.

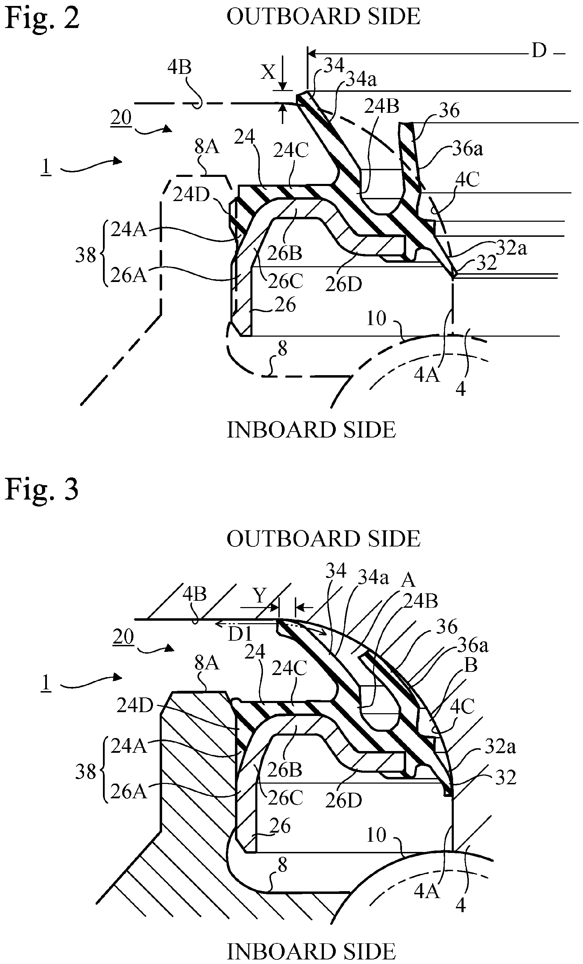

As shown in Figs. 2 and 3, the sealing device 20 is located inside a space surrounded by a cylindrical end portion 8A on the outboard side of the outer race 8 of the hub bearing 1, the outer peripheral surface 4A of a cylindrical part, in the vicinity of the balls 10, of the hub 4 of the hub bearing 1, a flange surface 4B of the hub 4 expanding further outward than the outer peripheral surface 4A, and an arc surface 4C connecting the outer peripheral surface 4A and the flange surface 4B. The flange surface 4B is a surface on the inboard side of the outboard side flange 18. Although the sealing device 20 is annular, only the left part is shown in Figs. 2 and 3.

The sealing device 20 has a composite structure having an elastic ring 24 and a rigid ring 26. The elastic ring 24 is made of an elastic material such as an elastomer. The rigid ring 26 is made of a rigid material such as metal, and reinforces the elastic ring 24. A part of the rigid ring 26 is embedded in the elastic ring 24 and is in close contact with the elastic ring 24.

The elastic ring 24 has an outer cylindrical part 24A, an inner annular part 24B, a connecting part 24C, and lips 32, 34, and 36. The outer cylindrical part 24A is engaged by interference fit (that is, press-fitted) into the inner peripheral surface of the end portion 8A of the outer race 8. The inner annular part 24B is located on the radially inner side of the outer cylindrical part 24A. The connecting part 24C connects the outer cylindrical part 24A and the inner annular part 24B. The lips 32, 34 and 36 extend from the inner annular part 24B toward the hub 4 of the hub bearing 1.

A protruding annular wall part 24D is formed on the outer peripheral surface of the outer cylindrical part 24A so as to protrude outwardly in radial directions and to be into contact with the inner peripheral surface of the end portion 8A of the outer race 8. When the elastic ring 24 is fitted into the inner peripheral surface of the end portion 8A of the outer race 8, the protruding annular wall part 24D is compressed radially inward and elastically deformed by the inner peripheral surface of the end portion 8A. Fig. 2 shows the protruding annular wall part 24D in an uncompressed state, with the end portion 8A shown in phantom line. Fig. 3 shows the protruding annular wall part 24D in a compressed state, with the sealing device 20 being attached to the hub bearing 1.

The connecting part 24C is of a circular annular shape and extends radially inward from one end of the outer cylindrical part 24A so as to be orthogonal to the central axis Ax of the hub bearing 1.

In this embodiment, the inner annular part 24B extends obliquely from the connecting part 24C radially inward and toward the inboard side, is bent to be orthogonal to the central axis Ax of the hub bearing 1, and extends further inwardly in radial directions.

Each of the lips 32, 34, and 36 is made of only an elastic material and is a thin plate-like ring extending from the inner annular part 24B, and the distal end of each lip is brought into contact with the hub 4. Whereas the sealing device 20 is attached to the stationary outer race 8, the hub 4 rotates, so that the lips 32, 34, and 36 slide on the hub 4.

The lip 32 is called a grease lip or a radial lip, extends from the innermost edge of the inner annular part 24B, and is to be in contact with the outer peripheral surface 4A of the cylindrical part of the hub 4 near the balls 10. The grease lip 32 extends radially inward and toward the inboard side, and plays a main role of preventing the lubricant from flowing out from the inside of the hub bearing 1.

The lips 34 and 36 extend from the inner annular part 24B to the lateral side (outboard side) and radially outward. The lip 34 is called a side lip or an axial lip, and is to be in contact with the flange surface 4B of the hub 4. The lip 36 is called an intermediate lip, and it is to be in contact with the arcuate surface 4C. The lips 34 and 36 play a main role in preventing foreign matter from flowing into the hub bearing 1 from the outside. The intermediate lip 36 has a backup function that blocks foreign matter that has passed through the side lip 34.

The radial inner surfaces 32A, 34A, and 36A of the lips 32, 34, and 36 (that is, the surfaces facing the hub 4 when the sealing device 20 is mounted on the hub bearing 1) may be coated with grease. The type of grease coated on the lips may be the same as, or different from, the type of grease that is a lubricant that is contained inside the hub bearing 1 and sealed by the grease lip 32. In addition, the type of grease coated on the surfaces 32A, 34A, and 36A may be the same, or different types of grease may be used. The grease may be coated on the lips by full-surface coating or spot coating. Regardless of the method used to coat the lips with grease, since the lips 32, 34, and 36 slide on the hub 4, the grease is coated on the surfaces 32A, 34A, and 36A over the entire circumference as a result.

Fig. 2 shows the lips 32, 34, and 36 of the initial shapes not attached to the hub bearing 1, whereas Fig. 3 shows the lips 32, 34, and 36 attached to the hub bearing 1 and they are deformed. Since the side lip 34 is deformed by the flange surface 4B, the side lip 34 has a deformation amount, i.e., an interference X against the flange surface 4B shown in Fig. 2. The interference X is defined as the amount of displacement of the distal end of the side lip 34 before and after contact with the flange surface 4B (the amount of displacement in the normal direction of the flange surface 4B). Furthermore, as shown in Fig. 3, the side lip 34 has a contact width Y with respect to the flange surface 4B. The contact width Y is defined as the contact length between the surface 34a of the side lip 34 and the flange surface 4B in radial directions of the sealing device 20. Each of the other lips 32 and 36 also has an interference and a contact width against the hub 4.

The rigid ring 26 has a cylindrical part 26A, an annular part 26B, a connecting part 26C, and an annular part 26D. The cylindrical part 26A is fitted into the inner peripheral surface of the end portion 8A of the outer race 8. The annular part 26B is located radially inside of the cylindrical part 26A and is oriented so as to be orthogonal to the central axis Ax of the hub bearing 1. The connecting part 26C connects the cylindrical part 26A and the annular part 26B. When the rigid ring 26 is fitted into the inner peripheral surface of the end portion 8A of the outer race 8, the cylindrical part 26A is compressed radially inward by the end portion 8A and elastically deformed. Fig. 2 shows the cylindrical part 26A in an uncompressed state. Fig. 3 shows the cylindrical part 26A in a compressed state.

The cylindrical part 26A of the rigid ring 26 and the outer cylindrical part 24A of the elastic ring 24 constitute a mounted part 38 that is fitted into the inner peripheral surface of the end portion 8A of the outer race 8. The connecting part 26C of the rigid ring 26 is in close contact with the outer cylindrical part 24A of the elastic ring 24, whereas the annular part 26B of the rigid ring 26 is in close contact with the connecting part 24C of the elastic ring 24.

The annular part 26D is in close contact with the inner annular part 24B of the elastic ring 24. The annular part 26D has a bent shape that is substantially homothetic to the bent shape of the inner annular part 24B.

In this sealing device 20, the diameter D (see Fig. 2) of the side lip 34 is 60 to 90 mm.

The outer peripheral surface 4A, the flange surface 4B, and the circular arc surface 4C of the hub 4 are formed by machining (for example, cutting and polishing using a lathe), and may have machining marks remaining thereon. Since the hub 4 is rotated in cutting or polishing using a lathe, the remaining machining marks may be, for example, multiple minute spiral grooves.

When a lip comes into contact with these surfaces with the spiral machining marks remaining, and the hub 4 rotates about the central axis Ax, the machining marks with which the lip is in contact serves as a feed screw. Therefore, fluid (for example, air and grease coated on the surface 34a) may be discharged from the space A between the side lip 34 and the intermediate lip 36 to the outside of the side lip 34.

The movement of the fluid depends on the spiral direction of the machining marks and the rotational direction of the hub 4. For example, in a sealing device 20 mounted on the right wheel side of a certain automotive vehicle, the fluid does not move outside and inside the space A when the automotive vehicle moves forward, but the fluid is discharged from the space A when the automotive vehicle moves backward. However, in the same sealing device 20 mounted on the left wheel side, the fluid is discharged from the space A when the automotive vehicle moves forward, but the fluid does not move outside and inside the space A when the automotive vehicle moves backward.

When the fluid is discharged from the space A between the lips 34 and 36 to the outside of the side lip 34, the pressure in the space A becomes negative. In this case, the side lip 34 is attracted from the state in Fig. 3 to the outboard side (that is, the side of flange surface 4B) by the negative pressure, and the contact pressure of the side lip 34 to the hub 4 increases. For this reason, the torque applied to the hub 4 will increase.

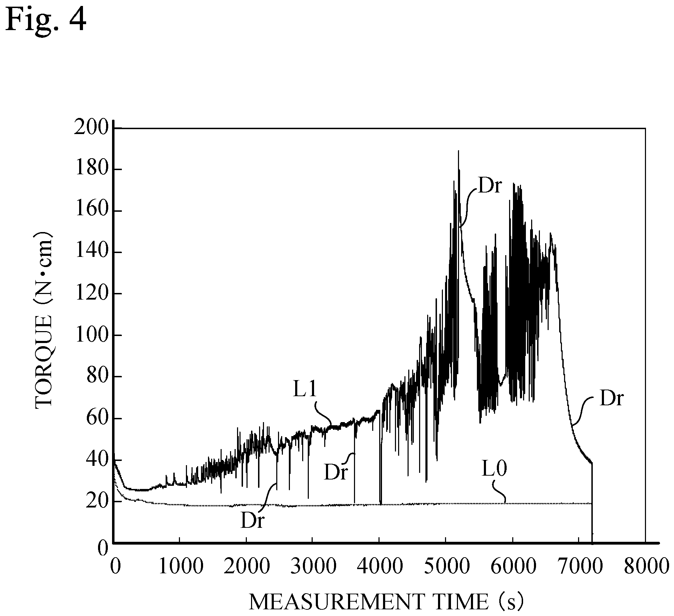

Fig. 4 is a graph showing an example of variations in torque applied by the sealing device 20 to the hub 4 of the hub bearing 1. In Fig. 4, line L0 indicates torque variation when the wheel provided with the hub bearing 1 is the left wheel of an automotive vehicle and the hub 4 rotates in the direction for moving the automotive vehicle forward. Line L1 indicates torque variation when the wheel provided with the hub bearing 1 is the right wheel of the automotive vehicle and the hub 4 rotates in the direction for moving the automotive vehicle forward. The hub 4 rotated for 7200 seconds (2 hours) and torque measurements were taken for 7210 seconds. The sharp drop of the torque almost perpendicular to the X-axis between 7200 and 7210 seconds in the graph was caused by a sudden drop in rotational speed of the hub 4.

As shown in Fig. 4, the sealing device 20 in the hub bearing 1 for the left wheel did not apply a large torque to the hub 4. However, the sealing device 20 in the hub bearing 1 for the right wheel applied a large torque to the hub 4. Moreover, the torque applied to the hub 4 by the sealing device 20 in the hub bearing 1 for the right wheel generally increased with the passage of time. It is supposed that frequent torque drops Dr might be caused by the fact that the side lip 34 attracted to the flange surface 4B by the negative pressure slid on the flange surface 4B, instantaneously causing minute gaps between the side lip 34 and the flange surface 4B, so that air entered the space A so as to instantaneously reduce the contact pressure of the side lip 34 against the hub 4.

In this embodiment, when the sealing device 20 is mounted on the hub bearing 1, the contact width Y of the side lip 34 to the flange surface 4B is less than 0.041 mm, and is preferably less than 0.035 mm. By setting in this way, the torque caused by the contact pressure that the side lip 34 applies to the flange surface 4B of the hub 4 can be remarkably reduced. Hereinafter, the basis for this will be described.

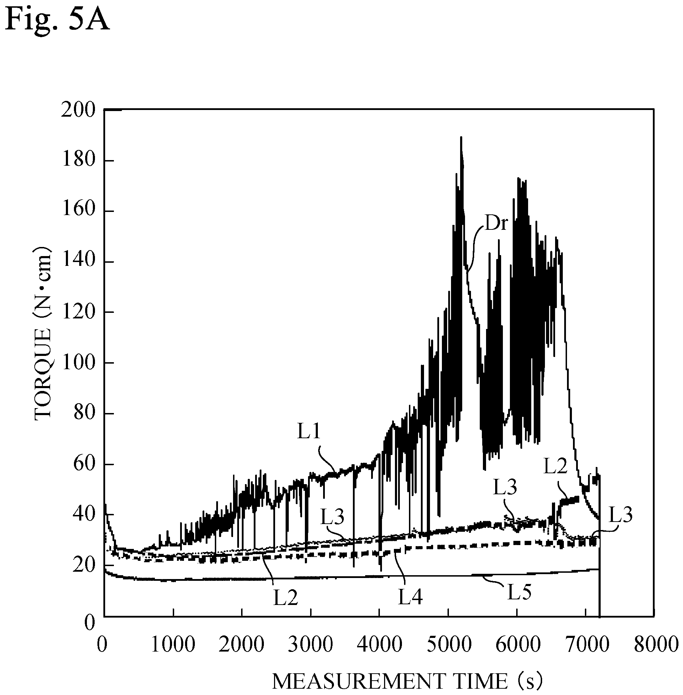

The inventors conducted an experiment to examine variations in torque applied by the sealing device 20 to the hub 4 of the hub bearing 1 while changing the interference X, and thus, the contact width Y. The experimental results are shown in Figs. 5A to 5C.

The common conditions in the experiment are as follows:
The surfaces 32A, 34A, and 36A of the lips 32, 34, and 36 were coated with the same type of grease. This grease contains lithium complex soap as a thickener and has a base oil kinematic viscosity at 40 degrees Celsius of 18 mm²/s (measured in accordance with JIS K 2283). The amount of grease coated on the surface 32A of the grease lip 32 was 0.17 grams, the amount of grease coated on the surface 34A of the side lip 34 was 0.2 grams, and the amount of grease coated on the surface 36A of the intermediate lip 36 was 0.17 grams.

The rotation speed of the hub 4 was constant at 1000 rpm. In a case in which the wheel provided with the hub bearing 1 was the right wheel of an automotive vehicle, the hub 4 was rotated in the direction in which the automotive vehicle moves forward. The hub 4 was rotated for 7200 seconds (2 hours) and torque measurements were taken for 7210 seconds. The sharp drop in the torque almost perpendicular to the X-axis between 7200 and 7210 seconds in the graph was caused by a sudden drop in rotational speed of the hub 4.

The ambient temperature was room temperature. The temperatures of the lips 32, 34, and 36 and the hub 4 increased over time due to friction, but the ambient temperature was held constant.

The surface roughness of the flange surface 4B and the arc surface 4C was 0.18 micrometers in arithmetic average roughness Rₐ (JIS B 0601-20001). The surface roughness was measured along direction D1 in Fig. 3 (that is, the direction along the contours of the flange surface 4B and the arc surface 4C in a cross section including the central axis Ax of the hub 4). This measurement was performed four times at different angular positions around the central axis Ax of the hub 4, and the average of the four measurement results was 0.18 micrometers.

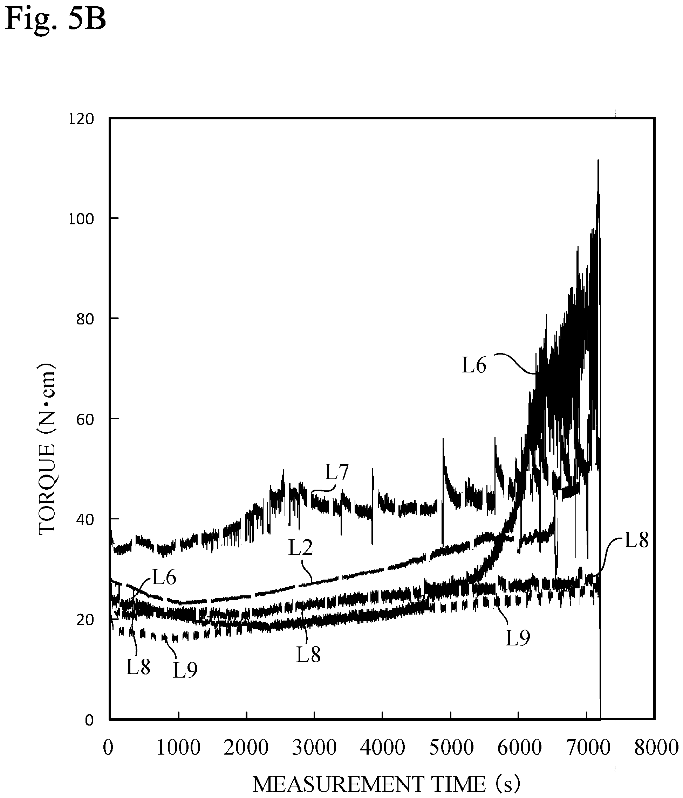

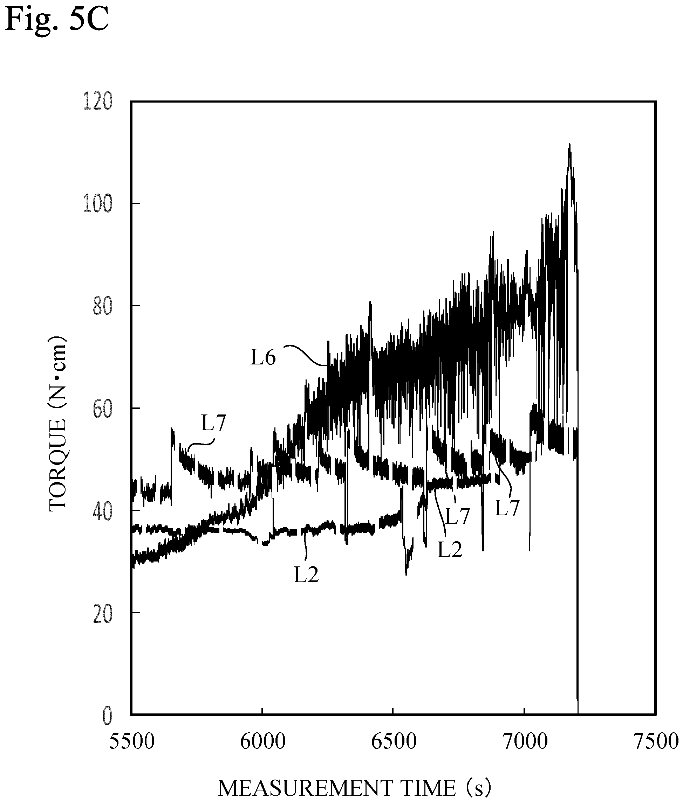

In the experiment, the interference X, and thus, the contact width Y of the side lip 34 with respect to the flange surface 4B was changed. In Fig. 5A, line L1 indicates the variation in torque in a case in which the contact width Y was 0.059 mm (interference X was 1.25 mm). Line L2 indicates the variation in torque in a case in which the contact width Y was 0.035 mm (interference X was 1.10 mm). Line L3 indicates the variation in torque in a case in which the contact width Y was 0.023 mm (interference X was 0.90 mm). Line L4 indicates the variation in torque in a case in which the contact width Y was 0.014 mm (interference X was 0.70 mm). Line L5 indicates the variation in torque in a case in which the contact width Y was 0.001 mm (interference X was 0.30 mm). The interference X was measured at room temperature. The contact width Y was estimated by simulation using FEM (Finite Element Method). Line L1 in Fig. 5 is the same experimental result as line L1 in FIG. 4.

As is clear from Fig. 5A, as the contact width Y of the side lip 34 with respect to the flange surface 4B increased (the interference X was larger), the sealing device 20 applied a larger torque to the hub 4. The torque decreased once and then generally increased over time.

However, as is clear from the comparison between line L1 and the other lines, in a case in which the contact width Y was 0.059 mm, the torque was remarkably increased, whereas in other cases, the increase in torque was not significant. In a case in which the contact width Y was 0.035 mm (line L2), the maximum torque was 58.623 N·cm, and in a case in which the contact width Y was 0.023 mm (line L3), the maximum torque was 40.195 N·cm. On the other hand, in a case in which the contact width Y was 0.059 mm (line L1), the maximum torque was as much as 188.97 N·cm.

Also, the sudden drop in torque was significant in a case in which the contact width Y was 0.059 mm (line LI) in which torque increased significantly, and in other cases, the sudden drop in torque was not significant. Therefore, the torque variation rate was remarkable in the case in which the contact width Y was 0.059 mm (line L1), and was small in other cases.

Fig. 5B is a graph showing variations in torque applied by the sealing device 20 to the hub 4 of the hub bearing 1 in a case in which the contact width Y was changed in a range of 0.041 mm to 0.032 mm (interference X was changed in a range of 1.15 mm to 1.05 mm). In Fig. 5B, line L2 indicates the variation in torque in a case in which the contact width Y was 0.035 mm (interference X was 1.10 mm). Line L6 indicates the variation in torque in a case in which the contact width Y was 0.041 mm (interference X was 1.15 mm). Line L7 indicates the variation in torque in a case in which the contact width Y was 0.038 mm (interference X was 1.12 mm). Line L8 indicates the variation in torque in a case in which the contact width Y was 0.033 mm (interference X was 1.08 mm). Line L9 indicates the variation in torque in a case in which the contact width Y was 0.032 mm (interference X was 1.05 mm). To facilitate the comparison of lines L2, L5, and L6, Fig. 5C shows enlarged lines L2, L5, and L6 after a measurement time of 5500 seconds.

As is clear from Figs. 5B and 5C, as the contact width Y of the side lip 34 to the flange surface 4B was larger (the interference X was larger), the sealing device 20 applied a larger torque to the hub 4. In a case in which the contact width Y was 0.041 mm (line L6), the torque remarkably increased, whereas in other cases, the increase in torque was not significant. In a case in which the contact width Y was 0.035 mm (line L2), the maximum torque was 58.623 N·cm, and in a case in which the contact width Y was 0.038 mm (line L7), the maximum torque was 61.395 N·cm. On the other hand, in a case in which the contact width Y was 0.041 mm (line L6), the maximum torque was as much as 111.755 N·cm.

As described above, in a case in which the contact width Y of the side lip 34 was 0.041 mm, the sealing device 20 applied a large torque to the hub 4 and the torque variation rate was large, but in a case in which the contact width Y was less than 0.041 mm, the torque applied to the hub 4 by the sealing device 20 was extremely small, and the torque variation rate was also extremely small.

Furthermore, in a case in which the contact width Y of the side lip 34 with respect to the flange surface 4B was 0.035 mm or less, the torque that the sealing device 20 applied to the hub 4 was smaller, and the variation rate of the torque was also smaller. If the contact width Y is 0.033 mm or less, the torque that the sealing device 20 applies to the hub 4 is smaller and the torque is more stable. When the contact width Y was 0.033 mm (line L8 in Fig. 5B), the maximum torque was 30.525 N·cm.

The inventors also conducted an experiment to examine the relationship between the interference (and thus the contact width) and the torque for the other lips 32 and 36. However, even if the interference (and hence the contact width) of the other lips 32 and 36 with respect to the hub 4 was changed, the influence on the torque variation was small.

### Modifications

Although the present invention has been described, the foregoing description is not intended to limit the present invention. Various modifications including omission, addition, and substitution of structural elements may be made within the scope of the present invention.

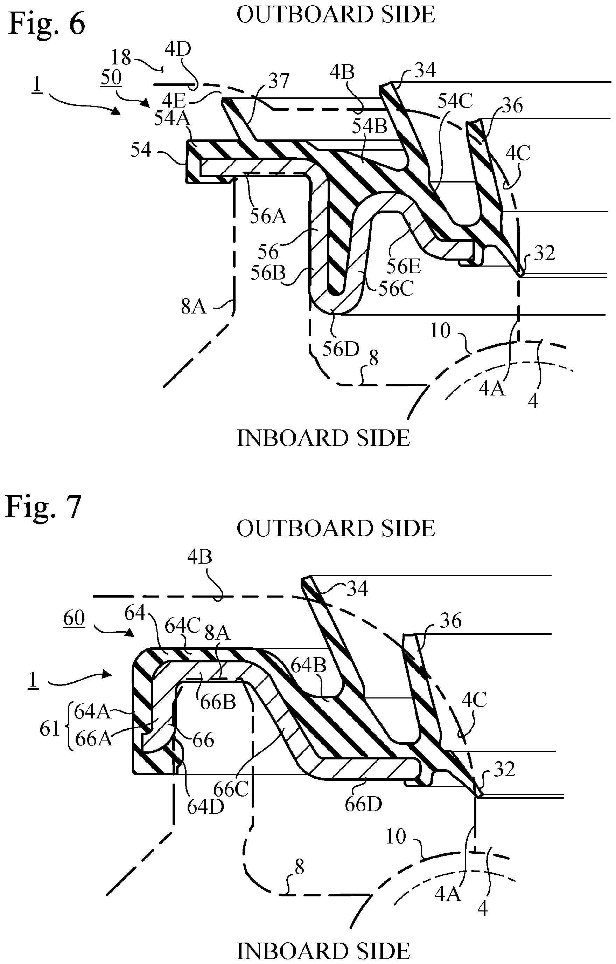

For example, Fig. 6 shows a sealing device according to a modification. In Fig. 6 and subsequent drawings, the same reference symbols are used to identify the components already described, and such components will not be described in detail.

The sealing device 50 of the modification shown in Fig. 6 is of a composite structure having an elastic ring 54 and a rigid ring 56. The elastic ring 54 is made of an elastic material such as an elastomer. The rigid ring 56 is made of a rigid material such as metal, and it reinforces the elastic ring 54. A part of the rigid ring 56 is embedded in the elastic ring 54 and is in close contact with the elastic ring 54.

The elastic ring 54 has an annular part 54A, a cylindrical part 54B, an inner annular part 54C, lips 32, 34, and 36, and an auxiliary lip 37. The annular part 54A extends radially inward so as to be substantially orthogonal to the central axis Ax of the hub bearing 1 (in parallel to the end surface of the end portion 8A of the outer race 8).

The cylindrical part 54B extends from the radial inner end of the annular part 54A to form a cylindrical shape. The cylindrical part 54 B is located inside the end portion 8A of the outer race 8.

The inner annular part 54C extends obliquely from the cylindrical part 54B radially inward and toward the inboard side, is bent, and extends further radially inward so as to be orthogonal to the central axis Ax of the hub bearing 1.

The rigid ring 56 has an annular part 56A, an outer cylindrical part 56B, an inner cylindrical part 56C, a connecting part 56D, and a bent part 56E. The annular part 56A extends radially inward so as to be orthogonal to the central axis Ax of the hub bearing 1 (in parallel to the end surface of the end portion 8A of the outer race 8). The annular part 56A faces the end surface of the end portion 8A of the outer race 8, and is in contact with the end surface. The annular part 56A is in close contact with the annular part 54A of the elastic ring 54.

The outer cylindrical part 56B constitutes a mounted part that is mounted on the end portion 8A of the outer race 8. Specifically, the outer cylindrical part 56B is engaged by interference fit (that is, is press-fitted) into the end portion 8A of the outer race 8, and the outer peripheral surface of the outer cylindrical part 56B is in contact with the inner peripheral surface of the end portion 8A of the outer race 8.

The inner cylindrical part 56C is located coaxially with the outer cylindrical part 56B. The connecting part 56D connects the outer cylindrical part 56B and the inner cylindrical part 56C. The bent part 56E extends from one end of the inner cylindrical part 56C, and has a bent shape that is substantially homothetic to the shape of the inner annular part 54C of the elastic ring 54.

The cylindrical part 54B of the elastic ring 54 is located between the outer cylindrical part 56B and the inner cylindrical part 56C, which are in close contact with the cylindrical part 54B. The bent part 56E is in close contact with the inner annular part 54C of the elastic ring 54.

The auxiliary lip 37 is formed only of an elastic material and extends to the outboard side. The auxiliary lip 37 extends toward the recess 4D formed in the outboard side flange 18 of the hub 4. The recess 4D is a portion concaved from the flange surface 4B. The auxiliary lip 37 can deflect foreign matter coming from the outside and minimize foreign matter reaching the side lip 34. The auxiliary lip 37 is not in contact with the recess 4D of the outboard side flange 18, and there is provided an annular clearance 4E of a labyrinth shape between the distal end edge of the auxiliary lip 37 and the recess 4D. However, the auxiliary lip 37 may be in contact with the recess 4D and may slide on the recess 4D.

Fig. 7 shows a sealing device according to another modification. The sealing device 60 of the modification shown in Fig. 7 is of a composite structure having an elastic ring 64 and a rigid ring 66. The elastic ring 64 is made of an elastic material such as an elastomer. The rigid ring 66 is made of a rigid material such as metal, and reinforces the elastic ring 64. A part of the rigid ring 66 is embedded in the elastic ring 64 and is in close contact with the elastic ring 64.

The elastic ring 64 has an outer cylindrical part 64A, an inner annular part 64B, a connecting part 64C, and lips 32, 34, and 36. The outer cylindrical part 64A is located outside the end portion 8A of the outer race 8. The inner annular part 64B is located on the radial inner side of the outer cylindrical part 64A. The connecting part 64C connects the outer cylindrical part 64A and the inner annular part 64B.

A protruding annular wall part 64D that protrudes radially inward and that is in contact with the outer peripheral surface of the end portion 8A of the outer race 8 is formed on the inner peripheral surface of the outer cylindrical part 64A. When the end portion 8A of the outer race 8 is fitted into the sealing device 60, the protruding annular wall part 64D is compressed radially outward by the outer peripheral surface of the end portion 8A and is elastically deformed.

The connecting part 64C has an annular shape, and extends radially inward from one end of the outer cylindrical part 64A so as to be orthogonal to the central axis Ax of the hub bearing 1 (in parallel to the end surface of the end portion 8A of the outer race 8).

The inner annular part 64B extends obliquely from the connecting part 64C radially inward and toward the inboard side, is bent, and extends further radially inward so as to be orthogonal to the central axis Ax of the hub bearing 1.

The rigid ring 66 has a cylindrical part 66A, an annular part 66B, an inclined annular part 66C, and an inner annular part 66D. The end portion 8A of the outer race 8 is engaged by interference fit (that is, is press-fitted) into the inner peripheral surface of the cylindrical part 66A. The annular part 66B extends radially inward from one end of the cylindrical part 66A so as to be orthogonal to the central axis Ax of the hub bearing 1 (in parallel to the end surface of the end portion 8A of the outer race 8). The inclined ring part 66C extends obliquely from the inner end of the annular part 66B inward in radial directions and toward the inboard side.

The cylindrical part 66A of the rigid ring 66 and the outer cylindrical part 64A of the elastic ring 64 constitute a mounted part 61 into which the end portion 8A of the outer race 8 is fitted. The cylindrical part 66A of the rigid ring 66 is in close contact with a portion of the inner peripheral surface of the outer cylindrical part 64A of the elastic ring 64 at which the protruding annular wall part 64D is not formed. The end portion 8A of the outer race 8 is press-fitted into the cylindrical part 66A and the outer cylindrical part 64A, and compresses the protruding annular wall part 64D radially outward.

The protruding annular wall part 64D of the elastic ring 64 is provided to improve the sealing capability between the end portion 8A of the outer race 8 and the sealing device 40 and to prevent or suppress rusting of the rigid ring 66. The protruding annular wall part 64D may be omitted, and in this case, even when the end portion 8A of the outer race 8 is fitted into the cylindrical part 66A, the outer cylindrical part 64A does not have to be in contact with the end portion 8A.

The annular part 66B of the rigid ring 66 faces the end surface of the end portion 8A of the outer race 8 and is in contact with the end surface. When the sealing device 40 is attached to the end portion 8A of the outer race 8, the annular part 66B serves as a stopper that comes into contact with the end surface of the end portion 8A of the outer race 8 and stops the movement of the sealing device 40. The annular part 66B is in close contact with the connecting part 64C of the elastic ring 64, whereas the inclined ring part 66C is in close contact with the inner annular part 64B of the elastic ring 64.

The inner annular part 66D of the rigid ring 66 is a ring oriented so as to be orthogonal to the central axis Ax of the hub bearing 1. The inner annular part 66D is in close contact with the inner annular part 64B of the elastic ring 64.

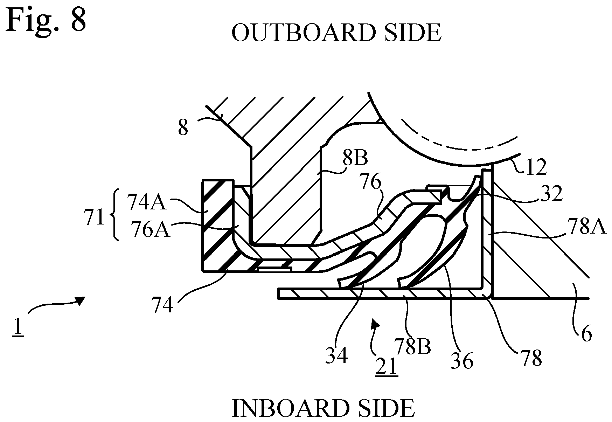

Fig. 8 is a partial cross-sectional view of a sealing device 21 according to another modification when in use. The embodiment and the modifications described above relate to the sealing device 20 on the outboard side (see Fig. 1), whereas this modification relates to the sealing device 21 on the inboard side.

The sealing device 21 is of a composite structure having an elastic ring 74 and a rigid ring 76. The elastic ring 74 is made of an elastic material such as an elastomer. The rigid ring 76 is made of a rigid material such as metal, and reinforces the elastic ring 74. A part of the rigid ring 76 is embedded in the elastic ring 74 and is in close contact with the elastic ring 74.

The elastic ring 74 has a cylindrical part 74A and lips 32, 34, and 36. The rigid ring 76 has a cylindrical part 76A. The cylindrical end portion 8B of the outer race 8 is engaged by interference fit (that is, is press-fitted) into the inner peripheral surface of the cylindrical part 76A. The cylindrical part 76A of the rigid ring 76 and the cylindrical part 74A of the elastic ring 74 constitute a mounted part 71 into which the end portion 8A of the outer race 8 is fitted.

A slinger, that is, a rotational sealing member (inner member) 78 is fixed to the inner race 6. The rotational sealing member 78 includes a cylindrical part 78A into which the inner race 6 is fitted (that is, press-fitted), and a flange part 78B that extends from the end of the cylindrical part 78A. The rotational sealing member 78 is formed of a rigid material such as metal. When the inner race 6 rotates, the rotational sealing member 78 rotates together with the inner race 6.

A part of the sealing device 21 is located in a space surrounded by the cylindrical end portion 8B on the inboard side of the outer race 8 of the hub bearing 1 and the rotational sealing member 78. Although the sealing device 21 and the rotational sealing member 78 are annular, only the left part is shown in Fig. 8.

The distal end of each of the grease lip 32 and the lips 34 and 36 of the sealing device 21 is in contact with the rotational sealing member 78. Whereas the sealing device 21 is attached to the stationary outer race 8, the inner race 6 and the rotational sealing member 78 rotate, so that the lips 32, 34, and 36 slide on the rotational sealing member 78.

The grease lip 32 is in contact with the cylindrical part 78A of the rotational sealing member 78. The grease lip 32 extends radially inward and toward the outboard side, and plays a primary role in preventing the lubricant from flowing out from the inside of the hub bearing 1. The lips 34 and 36 are in contact with the flange part 78B of the rotational sealing member 78. The lips 34 and 36 play a primary role in preventing foreign matter from flowing into the hub bearing 1 from the outside.

For the side lip 34 in each of the modifications shown in Figs. 6 to 8, when the sealing device is mounted on the hub bearing 1, the contact width Y of the side lip 34 with respect to the flange surface 4B or the flange part 78B is also preferably less than 0.041 mm, and more preferably, 0.035 mm or less, and more preferably 0.033 mm or less. The rotational sealing member 78 is generally formed by pressing, and in this case, it is considered that fluid is not discharged from the side lip 34 due to the adverse effect of the machining marks, but if the rotational sealing member 78 is shaped by cutting or polishing, it is conceivable that fluid is sent to the outside from the side lip 34 by the adverse effect of the machining marks, resulting in the side lip 34 applying a large torque to the rotational sealing member 78. In this case, if the contact width Y is less than 0.041 mm, more preferably 0.035 mm or less, and even more preferably 0.033 mm or less, the torque can be significantly reduced.

### Other Modifications

The shape and number of lips of the sealing device are not limited to the above. In a case in which multiple side lips are provided, the contact width of the outermost side lip in in radial directions with respect to the contact surface is preferably less than 0.041 mm, more preferably 0.035 mm or less, and more preferably 0.033 mm or less.

In the above-described embodiment and modifications, the hub 4, the inner race 6, and the rotational sealing member 78 that are inner members are rotating members, and the outer race 8 that is an outer member is a stationary member. However, the present invention is not limited to the above embodiment and modifications, and can be applied to sealing multiple members that rotate relative to each other. For example, the inner members may be stationary, and the outer member may rotate, or all of these members may rotate.

In the above-described embodiments and modifications, each sealing device is provided with a single rigid ring 26, 56, 66, or 76. However, the sealing device may have an outer rigid ring and an inner rigid ring that are separated from each other in radial directions. In this case, the outer rigid ring and the inner rigid ring can be relatively displaced in radial directions. Therefore, the amount of elastic deformation in radial directions of at least a part of the elastic ring can be increased. For this reason, even if a part of a rolling bearing is eccentric or is not perfectly round, the sealing device can have high sealing capability.

### REFERENCE SYMBOLS

1: Hub Bearing (Rolling Bearing)
4: hub (inner member)
4A: Outer Peripheral Surface of Cylindrical Part
4B: Flange Surface
6: Inner Race (Inner Member)
8: Outer Race (Outer Member)
18: Outboard Side Flange
20, 21, 50, 60: Sealing Device
24, 54, 64, 74: Elastic Ring
26, 56, 66, 76: Rigid Ring
32: Grease Lip (Radial Lip)
34: Side Lip (Axial Lip)
36: Intermediate Lip
38, 61, 71: Mounted Part
56B: Outer Cylindrical Part (Mounted Part)
78: Rotational Sealing Member (Inner Member)
78A: Cylindrical Part
78B: Flange Part

## Claims

1. A sealing device (20, 21, 50, 60) used in a rolling bearing (1) comprising an inner member (4, 78) and an outer member (8) that rotate relative to each other, the inner member (4, 78) comprising a cylindrical part (78A) and a flange (4B, 78B) expanding radially outward from the cylindrical part (78A), the cylindrical part (78A) and the flange (4B, 78B) of the inner member (4, 78) comprising machining marks in a shape of spiral grooves, the sealing device (20, 21, 50, 60) located between the inner member (4, 78) and the outer member (8) of a rolling bearing (1) for sealing a gap between the inner member (4, 78) and the outer member (8), the sealing device (20, 21, 50, 60) comprising:
a mounted part (38, 56B, 61, 71) that is to be mounted on the outer member (8) of the rolling bearing (1);
an inner annular part (24B, 54C, 64B) extending radially inward from the mounted part (38, 56B, 61, 71);
a grease lip (32) formed of an elastic material extending from the inner annular part (24B, 54C, 64B) toward the cylindrical part (78A) of the inner member (4, 78) of the rolling bearing (1), the grease lip (32) being in slidable contact with the cylindrical part (78A) of the inner member (4, 78) of the rolling bearing (1);
a side lip (34) formed of an elastic material extending from the inner annular part (24B, 54C, 64B) toward the flange (4B, 78B) of the inner member (4, 78) of the rolling bearing (1), the side lip (34) being in slidable contact with the flange (4B, 78B) of the inner member (4, 78) of the rolling bearing (1) and being in contact with the machining marks on the flange (4B, 78B), so that the machining marks on the flange (4B, 78B) serves as a feed screw for the side lip (34); and
a thin plate-like intermediate lip (36) formed of an elastic material extending from the inner annular part (24B, 54C, 64B) toward the inner member (4, 78) of the rolling bearing (1), the intermediate lip (36) being arranged intermediate between the grease lip (32) and the side lip (34), the intermediate lip (36) being in slidable contact with the inner member (4, 78) of the rolling bearing (1),
**characterized in that**
the grease lip (32) is in contact with the machining marks on the cylindrical part (78A), so that the machining marks on the cylindrical part (78A) serves as a feed screw for the grease lip (32),
the intermediate lip (36) is disposed radial inside of the side lip (34) and overlapping with the side lip (34), and is in contact with the machining marks on the inner member (4, 78), so that the machining marks on the inner member (4, 78) serves as a feed screw for the intermediate lip (36), and
a contact width (Y) of the side lip (34) to the flange (4B, 78B) is less than 0.041 mm in a case in which the sealing device (20, 21, 50, 60) is mounted on the rolling bearing (1), the contact width (Y) being defined as a contact length between a surface (34a) of the side lip (34) and the flange (4B, 78B) in radial directions of the sealing device (20, 21, 50, 60).

2. The sealing device (20, 21, 50, 60) according to claim 1, wherein the contact width (Y) of the side lip (34) to the flange (4B, 78B) is less than 0.035 mm in a case in which the sealing device (20, 21, 50, 60) is mounted on the rolling bearing (1).

3. The sealing device (20, 21, 50, 60) according to claim 1, wherein the contact width (Y) of the side lip (34) to the flange (4B, 78B) is less than 0.033 mm in a case in which the sealing device (20, 21, 50, 60) is mounted on the rolling bearing (1).

4. The sealing device (20, 21, 50, 60) according to claim 1, further comprising multiple side lips (34, 36), a contact width (Y) of a side lip (34) located radially outermost to the flange (4B, 78B) being less than 0.041 mm in a case in which the sealing device (20, 21, 50, 60) is mounted on the rolling bearing (1).

## Patentansprüche

1. Dichtungsvorrichtung (20, 21, 50, 60), die in einem Wälzlager (1) verwendet wird, das ein inneres Bauteil (4, 78) und ein äußeres Bauteil (8) aufweist, die sich relativ zueinander drehen, wobei das innere Bauteil (4, 78) einen zylindrischen Teil (78A) und einen Flansch (4B, 78B) aufweist, der sich von dem zylindrischen Teil (78A) radial nach außen erstreckt, wobei der zylindrische Teil (78A) und der Flansch (4B, 78B) des inneren Bauteils (4, 78) Bearbeitungsmarkierungen in einer Form von spiralförmigen Nuten aufweisen, wobei die Dichtungsvorrichtung (20, 21, 50, 60) zwischen dem inneren Bauteil (4, 78) und dem äußeren Bauteil (8) eines Wälzlagers (1) angeordnet ist, um einen Spalt zwischen dem inneren Bauteil (4, 78) und dem äußeren Bauteil (8) abzudichten, wobei die Dichtungsvorrichtung (20, 21, 50, 60) Folgendes aufweist:
einen Anbauteil (38, 56B, 61, 71), der an das äußere Bauteil (8) des Wälzlagers (1) zu montieren ist;
einen inneren ringförmigen Teil (24B, 54C, 64B), der sich von dem Anbauteil (38, 56B, 61, 71) radial nach innen erstreckt;
eine Fettlippe (32), die aus einem elastischen Material ausgebildet ist und sich von dem inneren ringförmigen Teil (24B, 54C, 64B) zu dem zylindrischen Teil (78A) des inneren Bauteils (4, 78) des Wälzlagers (1) erstreckt, wobei die Fettlippe (32) in Gleitkontakt mit dem zylindrischen Teil (78A) des inneren Bauteils (4, 78) des Wälzlagers (1) ist;
eine Seitenlippe (34), die aus einem elastischen Material ausgebildet ist und sich von dem inneren ringförmigen Teil (24B, 54C, 64B) in Richtung des Flansches (4B, 78B) des inneren Bauteils (4, 78) des Wälzlagers (1) erstreckt, wobei die Seitenlippe (34) in Gleitkontakt mit dem Flansch (4B, 78B) des inneren Bauteils (4, 78) des Wälzlagers (1) ist und mit den Bearbeitungsmarkierungen an dem Flansch (4B, 78B) in Kontakt ist, sodass die Bearbeitungsmarkierungen an dem Flansch (4B, 78B) als eine Förderspirale für die Seitenlippe (34) dienen; und
eine dünne plattenartige Zwischenlippe (36), die aus einem elastischen Material ausgebildet ist und sich von dem inneren ringförmigen Teil (24B, 54C, 64B) in Richtung des inneren Bauteils (4, 78) des Wälzlagers (1) erstreckt, wobei die Zwischenlippe (36) zwischen der Fettlippe (32) und der Seitenlippe (34) angeordnet ist und die Zwischenlippe (36) in Gleitkontakt mit dem inneren Bauteil (4, 78) des Wälzlagers (1) ist,
**dadurch gekennzeichnet, dass**
die Fettlippe (32) in Kontakt mit den Bearbeitungsmarkierungen an dem zylindrischen Teil (78A) ist, sodass die Bearbeitungsmarkierungen an dem zylindrischen Teil (78A) als eine Förderspirale für die Fettlippe (32) dienen,
die Zwischenlippe (36) von der Seitenlippe (34) radial innenliegend und überlappend mit der Seitenlippe (34) angeordnet ist und in Kontakt mit den Bearbeitungsmarkierungen an dem inneren Bauteil (4, 78) ist, sodass die Bearbeitungsmarkierungen an dem inneren Bauteil (4, 78) als eine Förderspirale für die Zwischenlippe (36) dienen, und
eine Kontaktbreite (Y) der Seitenlippe (34) zu dem Flansch (4B, 78B) geringer als 0,041 mm ist, wenn die Dichtungsvorrichtung (20, 21, 50, 60) an dem Wälzlager (1) montiert ist, wobei die Kontaktbreite (Y) als eine Kontaktlänge zwischen einer Fläche (34a) der Seitenlippe (34) und dem Flansch (4B, 78B) in Radialrichtungen der Dichtungsvorrichtung (20, 21, 50, 60) definiert ist.

2. Dichtungsvorrichtung (20, 21, 50, 60) gemäß Anspruch 1, wobei die Kontaktbreite (Y) der Seitenlippe (34) zu dem Flansch (4B, 78B) geringer als 0,035 mm ist, wenn die Dichtungsvorrichtung (20, 21, 50, 60) an dem Wälzlager (1) montiert ist.

3. Dichtungsvorrichtung (20, 21, 50, 60) gemäß Anspruch 1, wobei die Kontaktbreite (Y) der Seitenlippe (34) zu dem Flansch (4B, 78B) geringer als 0,033 mm ist, wenn die Dichtungsvorrichtung (20, 21, 50, 60) an dem Wälzlager (1) montiert ist.

4. Dichtungsvorrichtung (20, 21, 50, 60) gemäß Anspruch 1, die des Weiteren mehrere Seitenlippen (34, 36) aufweist, wobei eine Kontaktbreite (Y) einer Seitenlippe (34), die radial ganz außen gelegen ist, zu dem Flansch (4B, 78B) geringer als 0,041 mm ist, wenn die Dichtungsvorrichtung (20, 21, 50, 60) an dem Wälzlager (1) montiert ist.

## Revendications

1. Dispositif d'étanchéité (20, 21, 50, 60) utilisé dans un palier à roulement (1) comprenant un élément interne (4, 78) et un élément externe (8) qui tournent l'un par rapport à l'autre, l'élément interne (4, 78) comprenant une partie cylindrique (78A) et une bride (4B, 78B) subissant une expansion radialement vers l'extérieur à partir de la partie cylindrique (78A), la partie cylindrique (78A) et la bride (4B, 78B) de l'élément interne (4, 78) comprenant des marques d'usinage se présentant sous la forme de rainures en spirale, le dispositif d'étanchéité (20, 21, 50, 60) étant positionné entre l'élément interne (4, 78) et l'élément externe (8) d'un palier à roulement (1) pour sceller un espace entre l'élément interne (4, 78) et l'élément externe (8), le dispositif d'étanchéité (20, 21, 50, 60) comprenant :
une partie montée (38, 56B, 61, 71) qui doit être montée sur l'élément externe (8) du palier à roulement (1) ;
une partie annulaire interne (24B, 54C, 64B) s'étendant radialement vers l'intérieur à partir de la partie montée (38, 56B, 61, 71) ;
une lèvre de graissage (32) formée avec un matériau élastique s'étendant à partir de la partie annulaire interne (24B, 54C, 64B) vers la partie cylindrique (78A) de l'élément interne (4, 78) du palier à roulement (1), la lèvre de graissage (32) étant en contact coulissant avec la partie cylindrique (78A) de l'élément interne (4, 78) du palier à roulement (1) ;
une lèvre latérale (34) formée avec un matériau élastique s'étendant à partir de la partie annulaire interne (24B, 54C, 64B) vers la bride (4B, 78B) de l'élément interne (4, 78) du palier à roulement (1), la lèvre latérale (34) étant en contact coulissant avec la bride (4B, 78B) de l'élément interne (4, 78) du palier à roulement (1) et étant en contact avec les marques d'usinage sur la bride (4B, 78B), de sorte que les marques d'usinage sur la bride (4B, 78B) servent de vis d'alimentation pour la lèvre latérale (34) ; et
une lèvre intermédiaire en forme de plaque fine (36) formée avec un matériau élastique s'étendant à partir de la partie annulaire interne (24B, 54C, 64B) vers l'élément interne (4, 78) du palier à roulement (1), la lèvre intermédiaire (36) étant agencée entre la lèvre de graissage (32) et la lèvre latérale (34), la lèvre intermédiaire (36) étant en contact coulissant avec l'élément interne (4, 78) du palier à roulement (1),
**caractérisé en ce que** :
la lèvre de graissage (32) est en contact avec les marques d'usinage sur la partie cylindrique (78A), de sorte que les marques d'usinage sur la partie cylindrique (78A) servent de vis d'alimentation pour la lèvre de graissage (32),
la lèvre intermédiaire (36) est disposée radialement à l'intérieur de la lèvre latérale (34) et chevauchant sur la lèvre latérale (34) et est en contact avec les marques d'usinage sur l'élément interne (4, 78), de sorte que les marques d'usinage sur l'élément interne (4, 78) servent de vis d'alimentation pour la lèvre intermédiaire (36), et
une largeur de contact (Y) de la lèvre latérale (34) jusqu'à la bride (4B, 78B) est inférieure à 0,041 mm dans un cas dans lequel le dispositif d'étanchéité (20, 21, 50, 60) est monté sur le palier à roulement (1), la largeur de contact (Y) étant définie comme une longueur de contact entre une surface (34a) de la lèvre latérale (34) et la bride (4B, 78B) dans des directions radiales du dispositif d'étanchéité (20, 21, 50, 60).

2. Dispositif d'étanchéité (20, 21, 50, 60) selon la revendication 1, dans lequel la largeur de contact (Y) de la lèvre latérale (34) jusqu'à la bride (4B, 78B) est inférieure à 0,035 mm dans un cas dans lequel le dispositif d'étanchéité (20, 21, 50, 60) est monté sur le palier à roulement (1).

3. Dispositif d'étanchéité (20, 21, 50, 60) selon la revendication 1, dans lequel la largeur de contact (Y) de la lèvre latérale (34) jusqu'à la bride (4B, 78B) est inférieure à 0,033 mm dans un cas dans lequel le dispositif d'étanchéité (20, 21, 50, 60) est monté sur le palier à roulement (1).

4. Dispositif d'étanchéité (20, 21, 50, 60) selon la revendication 1, comprenant en outre plusieurs lèvres latérales (34, 36), une largeur de contact (Y) d'une lèvre latérale (34) positionnée radialement le plus à l'extérieur de la bride (4B, 78B) étant inférieure à 0,041 mm dans un cas dans lequel le dispositif d'étanchéité (20, 21, 50, 60) est monté sur le palier à roulement (1).
